# EUROPÄISCHE PATENTSCHRIFT

(11) **EP 3 386 675 B1**
(45) Veröffentlichungstag und Bekanntmachung des Hinweises auf die Patenterteilung: **22.09.2021**
(21) Anmeldenummer: 16809746.7
(22) Anmeldetag: 07.12.2016
(51) Int. Cl.: B23K 26/04, B23K 26/38, B23K 26/046

(54) **VERFAHREN ZUR BESTIMMUNG DER REFERENZ-FOKUSLAGE EINES LASERSTRAHLS**
METHOD FOR DETERMINING THE REFERENCE FOCAL POSITION OF A LASER BEAM
PROCÉDÉ POUR DÉTERMINER LA POSITION FOCALE DE RÉFÉRENCE D'UN FAISCEAU LASER

(30) Priorität: 11.12.2015 DE 102015224963
(43) Veröffentlichungstag der Anmeldung: 17.10.2018
(73) Patentinhaber: Trumpf Werkzeugmaschinen GmbH + Co. KG, 71254 Ditzingen (DE)
(72) Erfinder: BLASCHKA, Markus, 71101 Schönaich (DE); HALLASCH, Dieter, 71254 Ditzingen (DE); ZIMMERMANN, Markus, 70771 Leinfelden-Echterdingen (DE)
(74) Vertreter: Kohler Schmid Möbus Patentanwälte
(86) Internationale Anmeldenummer: PCT/EP2016/080021
(87) Internationale Veröffentlichungsnummer: WO 2017/097812

(56) Entgegenhaltungen:
- WO-A1-2009/046786
- JP-A- H10 314 966

## Beschreibung

Die Erfindung betrifft ein Verfahren zur Bestimmung einer Referenz-Fokuslage eines Laserstrahls einer Laseranlage.

Um Werkstücke hinreichend genau bearbeiten zu können, sei es durch Laserschneiden oder Laserschweißen, ist es erforderlich, den Laserstrahl mit der Stelle, an der er die höchste Leistungsdichte aufweist, in Kontakt mit dem Werkstück zu bringen. Das Problem ist also, die schmalste Stelle des Laserstrahls zu finden. Dazu ist es beispielsweise bekannt, dass in ein Referenzwerkstück unterschiedliche Schlitze mit dem Laserstrahl geschnitten werden, wobei für jeden Schlitz eine andere Fokuslage verwendet wird. Anschließend wird das Referenzwerkstück entnommen und wird die Schlitzbreite manuell gemessen. Die Fokuslage, mit der die geringste Schlitzbreite erreicht wurde, ist die für eine Werkstückbearbeitung geeignetste Fokuslage. Dieses Verfahren ist relativ aufwändig und nicht automatisierbar.

Aus der JP-H-10314966 (Basis des Oberbegriffes des Anspruchs 1) ist es bekannt, mehrere Einschnitte mit einem Laserstrahl in einem plattenartigen Körper zu erzeugen und dazu unterschiedliche Fokuslagen zu verwenden. Außerdem ist es bekannt, optisch, nämlich mit Hilfe einer Kamera, die Breite eines Einschnitts zu erfassen. Aus der DE 102 55 628 A1 ist es bekannt, die Schnittspaltbreite von mit unterschiedlicher Fokuslage in ein Testwerkstück geschnittenen Linien mithilfe einer Kamera zu vermessen.

Die JP H1076384 A offenbart ein Verfahren zur Fokuslagenbestimmung, bei dem mehrere Linien mit unterschiedlicher Fokuslage in ein Werkstück geschnitten werden. Anschließend wird der Schneidkopf quer über die Linien bewegt und wird die Linienbreite kapazitiv mithilfe eines Abstandssensors vermessen.

Aus der EP 1 750 891 B1 ist ein Verfahren zur Fokuslagenbestimmung bekannt, bei dem durch wiederholtes Überfahren eines geschnittenen Spalts mit geänderter Fokuslage und der Detektion der Prozessstrahlung ermittelt wird, bei welcher Fokuslage der geschnittene Spalt die minimale Breite aufweist.

Aus der WO 2009/046786 A1 ist ein Verfahren zur Fokuslagenbestimmung durch Schneiden einer durchgehenden Linie mit variierender Fokuslage und anschließendem seitlichen Antasten der geschnittenen Linie bekannt. Das Antasten kann mechanisch, kapazitiv oder durch den Laserstrahl erfolgen.

Aufgabe der vorliegenden Erfindung ist es, ein alternatives Verfahren bereit zu stellen, mit dem die korrekte Fokuslage des Laserstrahls einer Laseranlage auf einfache Art und Weise mit an der Laseranlage ohnehin vorhandenen Komponenten bestimmt werden kann.

Gelöst wird diese Aufgabe erfindungsgemäß durch ein Verfahren zur Bestimmung der für einen Werkstückbearbeitungsprozess geeigneten Fokuslage eines Laserstrahls einer Laseranlage, mit den Merkmalen des Patentanspruchs 1.

Die Referenz-Fokuslage des Laserstrahls ist dabei beispielsweise diejenige Fokuslage, bei der der Strahlfokus auf der Werkstückoberfläche, d.h. auf der Oberfläche des plattenartigen Körpers, liegt. Der Abstand der Laserdüse zu der Oberfläche des plattenartigen Körpers und/oder die Fokussierungseinrichtung des Laserbearbeitungskopfs sind dann so eingestellt, dass der Strahlfokus des Laserstrahls auf der Oberfläche des plattenartigen Körpers liegt. Mit dieser Information (dem Abstand bzw. der Einstellung der Fokussierungseinrichtung, bei dem bzw. bei der der der Strahlfokus auf der Oberfläche des plattenartigen Körpers liegt) kann bei der späteren Werkstückbearbeitung eine gewünschte Fokuslage eingestellt werden. Erfindungsgemäß ist zur Bestimmung der Referenz-Fokuslage vorgesehen, dass mit variabler Fokuslageneinstellung mehrere Einschnitte, insbesondere mehrere parallele Einschnitte, in ein Referenzwerkstück, insbesondere einen plattenartigen Körper, eingebracht werden. Nach dem Schneiden der Einschnitte in den plattenartigen Körper, insbesondere ein Referenzblech, wird der plattenartige Körper erneut mit dem Laserstrahl bestrahlt. Wenn der Laserstrahl auf das Material des plattenartigen Körpers um die Einschnitte herum auftrifft, entsteht Prozessstrahlung und/oder eine reflektierte Laserstrahlung. Prozessstrahlung kann beispielsweise mithilfe einer ohnehin an einer Laseranlage vorhandenen Einstechsensorik erfasst werden. Reflektierte Laserstrahlung kann beispielsweise mithilfe einer ohnehin vorhandenen Schutzglasüberwachungsvorrichtung detektiert werden. Die so erfassten Parameter Prozessstrahlung und/oder reflektierte Strahlung können über einen Auswertealgorithmus ausgewertet werden. Auf diese Art und Weise können die Kanten der Einschnitte detektiert werden. Über einen weiteren Algorithmus kann anschließend die Kanteninformation aufbereitet und verrechnet werden, um so automatisch die Breite der Einschnitte und insbesondere den Einschnitt mit der geringsten Breite zu bestimmen. Die Fokuslage, die dem Einschnitt mit der geringsten Breite zugeordnet ist, stellt dann gemäß der Erfindung die Referenz-Fokuslage dar.

Da der Laserstrahl der Laseranlage als Lichtquelle zur Bestrahlung des plattenförmigen Körpers genutzt wird, ist keine zusätzliche Lichtquelle notwendig. Erfindungsgemäß ist es somit möglich, an einer Laseranlage die Fokuslage zu kalibrieren, indem bereits vorhandene Komponenten genutzt werden. Eine Laseranlage verfügt bereits über eine für das geregelte Einstechen notwendige Sensorik sowie über eine Anbindung dieser Sensorik an eine zentrale Sensortechnologiesteuerungseinheit. Auch der ohnehin vorhandene Laserbearbeitungskopf kann verwendet werden, um das Bestrahlen des plattenartigen Körpers sicherzustellen. Das Bestrahlen des plattenartigen Körpers erfolgt dabei vorzugsweise mit einer reduzierten Laserleistung und bei einer Laserfrequenz > 10 KHz. Die Laserleistung ist vorzugsweise gerade so groß, dass ein Prozess entsteht, von dem Prozesslicht ausgeht. Je sensibler die zur Verfügung stehende Sensorik ist, desto geringer kann die Leistung sein.

Vorzugsweise werden der Laserstrahl und der plattenartige Körper quer zur Längsrichtung der Einschnitte relativ zueinander bewegt. Dabei ist es vorteilhaft, wenn die Einschnitte parallel zueinander liegen, da somit der Laserstrahl und der plattenartige Körper nur in einer Richtung relativ zueinander bewegt werden müssen.

Weitere Vorteile ergeben sich, wenn der den Laserstrahl auf den plattenförmigen Körper ausrichtende Bearbeitungskopf mit konstantem Abstand zum plattenartigen Körper und mit konstanter Geschwindigkeit relativ zum plattenartigen Körper bewegt wird. Die Geschwindigkeit kann dabei so gering gewählt werden, dass die zeitliche Auflösung zum Abtasten der Kanten der Einschnitte ausreichend hoch ist. Sie sollte jedoch nicht zu gering sein, da sonst beim Auftreffen des Laserstrahls auf eine Kante eines Einschnittes keine saubere/scharfe/steile Flanke im Prozesslichtsignal bzw. im Signal der reflektierten Strahlung sichtbar wird. Außerdem besteht die Gefahr, dass bei zu langsamem Vorschub die Kanten schon angeschmolzen werden, ehe diese eindeutig detektiert werden. Beispielsweise kann die Relativgeschwindigkeit von Lichtquelle zum plattenartigen Körper bei 1m/min liegen.

Die Laserleistung zum Abscannen des plattenartigen Körpers sollte so hoch gewählt werden, dass ein ausreichend starker Prozesslichtpegel beim Auftreffen auf das Material des plattenartigen Körpers generiert wird. Grundsätzlich denkbar ist es, die Laserleistung auf einen so hohen Wert einzustellen, so dass das Material des plattenartigen Körpers zwischen zwei Einschnitten abgeschnitten wird.

Der eingestellte Gasdruck der Laseranlage sollte während der Relativbewegung von Lichtquelle und plattenartigem Körper möglichst klein sein, beispielsweise 0,3 bar betragen. So wird verhindert, dass sich der plattenartige Körper, insbesondere wenn er als Blech ausgebildet ist, beim Vermessen verbiegt und damit die Messung negativ beeinflusst.

Um eine genaue Messung sicher zu stellen, ist es vorteilhaft, wenn die Einschnitte mit einer Breite erzeugt werden, die größer ist als eine einfache Schnittspaltbreite. Auf diese Weise wird sichergestellt, dass beim Vermessen der Einschnitte das Signal der Prozessstrahlung bzw. der reflektierten Laserleistung nach dem Überfahren der ersten Kante des Einschnitts auf ein Minimum abklingen kann, ehe es beim Wiederauftreffen auf das Werkstückmaterial wieder ansteigt. Somit kann die Genauigkeit der Kantendetektion verbessert werden.

Besondere Vorteile ergeben sich, wenn die Lichtquelle und der plattenartige Körper zweimal in entgegengesetzten Richtungen relativ zueinander bewegt werden, wobei für jede Relativbewegung nur eine der Kanten eines Einschnitts detektiert wird. Bei jeder Bewegungsrichtung wird also nur jeweils eine der Kanten eines Einschnitts detektiert. Auf diese Weise wird die Messgenauigkeit verbessert. Besonders bevorzugt wird für jede Bewegungsrichtung nur diejenige Kante des Einschnitts detektiert, die in der Bewegungsrichtung dem Einschnitt folgt, da die Detektion beim "Auffahren" auf die Kante besonders prozesssicher möglich ist. Zur Bestimmung der Einschnittsbreiten müssen dann die Positionsinformationen aus der Hin- und der Rückfahrt kombiniert werden. Zwischen den einzelnen "Strahlbahnen" (Hin- und Rückfahrt) muss ein gewisser Sicherheitsabstand vorhanden sein, so dass die Kantenverletzung von dem Scannen in der einen Richtung nicht das Scannen in der anderen Richtung verfälscht. Vorzugsweise haben die Einschnitte daher eine Tiefe > 1 mm, besonders bevorzugt >1,5 mm.

Gemäß einer weiteren Verfahrensvariante kann vorgesehen sein, dass die Einschnitte erzeugt werden, indem in einer Längsrichtung des zu erzeugenden Einschnitts mit dem Laserstrahl ein erster einfacher Schnittspalt erzeugt wird, anschließend in einer Richtung quer zur Längsrichtung ein zweiter einfacher Schnittspalt erzeugt wird und dann in Längsrichtung aber entgegen gesetzt zur Erzeugung des ersten einfachen Schnittspalts ein dritter einfacher Schnittspalt erzeugt wird, bis ein Teil des plattenartigen Körpers ausgeschnitten ist. Dadurch wird sichergestellt, dass ein Einschnitt breiter ist als ein einfacher Schnittspalt. Ein einfacher Schnittspalt entsteht dabei, wenn der Laserstrahl lediglich in einer Richtung relativ zum plattenartigen Körper bewegt wird. Die Breite des einfachen Schnittspalts entspricht daher im Wesentlichen der Breite bzw. dem Durchmesser des Laserstrahls.

Eine Kante eines Einschnitts kann detektiert werden, wenn ein erfasster Parameter einen ersten vorgegebenen Referenzwert über- oder unterschreitet. Insbesondere kann ein Referenzwert für die Leistung der Prozessstrahlung und/oder ein Referenzwert für eine reflektierte Laserstrahlung vorgegeben und beobachtet werden, ob die Leistung der Prozessstrahlung als Parameter oder die reflektierte Laserstrahlung als Parameter den Referenzwert über- oder unterschreitet. Wenn ein solches Passieren des vorgegebenen Referenzwerts durch einen Parameter (Leistung der Prozessstrahlung oder Leistung der reflektierten Strahlung) erkannt wird, wird eine Kante detektiert.

Alternativ oder zusätzlich kann vorgesehen sein, dass eine Kante eines Einschnitts erkannt wird, wenn ein Gradient einen zweiten Referenzwert über- oder unterschreitet, wobei der Gradient eines Parameters gebildet wird. Insbesondere kann vorgesehen sein, dass ein Gradient gebildet wird, in dem ein aktueller Parameterwert (Wert eines Parameters, z.B. Leistung der Prozessstrahlung, zu einem Abtastzeitpunkt) von einem vorangegangenen Parameterwert (Wert des Parameters zu einem vorhergehenden Abtastzeitpunkt) subtrahiert wird. Eine Kante kann insbesondere dann erkannt werden, wenn gleichzeitig der erste und der zweite vorgegebene Referenzwert passiert, also überschritten oder unterschritten, werden.

Alternativ oder zusätzlich kann vorgesehen sein, dass aus dem oder den erfassten Parameter(n) über mehrere Abtastzeitpunkte ein Gradient gebildet wird, ein Mittelwert der Gradienten gebildet wird und dieser mit einem dritten Referenzwert verglichen wird, wobei eine Kante eines Einschnitts detektiert wird, wenn der Mittelwert einen dritten Referenzwert über- oder unterschreitet. Die Mittelung kann dabei derart erfolgen, dass die Summe der Gradienten durch die Anzahl der verwendeten Abtastzeitpunkte geteilt wird.

Für die mathematische Auswertung der ermittelten Breiten der Einschnitte kann ein Kurvenfit an die ermittelten Breiten erfolgen. Aus dem Minimum der Kurve können die minimale Schnittspaltbreite und die zugehörige Fokuslage als Referenz-Fokuslage bestimmt werden. Auf diese Weise ist erkennbar, wenn eine einzelne Breite nicht zu den übrigen passt, d.h. deutlich von der berechneten Kurve abweicht. Diese Breite kann bei der Auswertung vernachlässigt werden. Durch die Bewertung der Genauigkeit des Kurvenfits (z.B. über die mittleren Fehlerquadrate) kann außerdem die Messqualität überprüft werden. Wenn die Summe der Abweichungen der Breiten von der berechneten Kurve zu groß ist, kann eine Meldung ausgegeben werden, dass die Messung wiederholt werden muss.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine schematische Darstellung eines Teils einer Laseranlage;
- Fig. 2: eine schematische Darstellung zur Erläuterung des Begriffs der Fokuslage;
- Fig. 3: eine Darstellung eines Laserschneidkopfs und eines plattenartigen Körpers zur Erläuterung des erfindungsgemäßen Verfahrens;
- Fig. 4: ein Diagramm zur Erläuterung der Kantendetektion;
- Fig. 5: ein Flussdiagramm zur Erläuterung des erfindungsgemäßen Verfahrens;
- Fig. 6: ein Diagramm zur Verdeutlichung eines Beispiels zur Ermittlung einer minimalen Einschnittbreite.

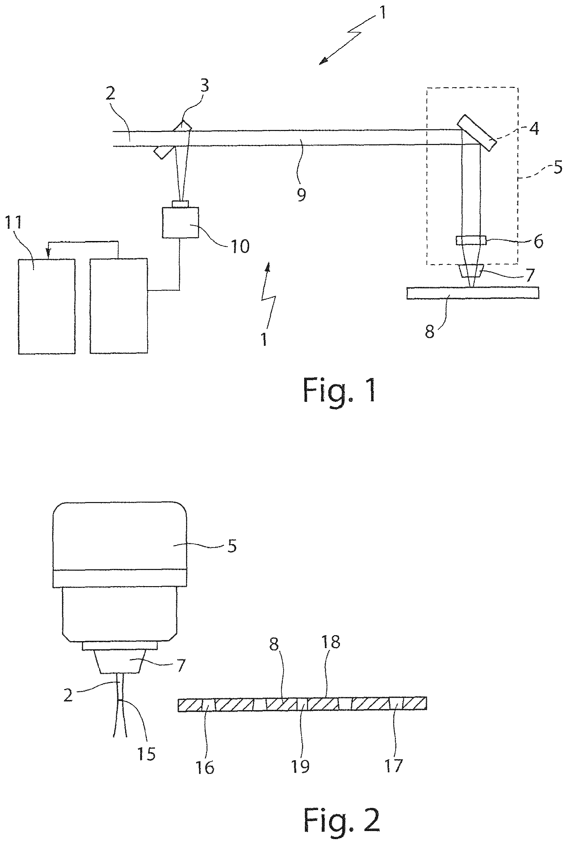

Gemäß der Figur 1 wird in einer Laseranlage 1, insbesondere einer Laserschneidanlage, ein Laserstrahl 2 durch einen als Scraperspiegel ausgebildeten Spiegel 3 auf einen Umlenkspiegel 4 gelenkt, der in einem Laserbearbeitungskopf 5 angeordnet ist. Der Laserstrahl 2 wird mittels einer als Linse ausgebildeten Fokussierungseinrichtung 6 fokussiert und durch eine Laserdüse 7 hindurch auf ein Werkstück 8 gelenkt. Wenn der Laserstrahl 2 auf das Werkstück 8 trifft, entsteht Prozessstrahlung. Diese wird über den Spiegel 4 zurückreflektiert und durch den Spiegel 3 aus dem Laserstrahlengang 9 ausgekoppelt und auf eine Messeinrichtung 10 gelenkt. Die Messeinrichtung 10 umfasst eine Fotodiode mit entsprechender Elektronik. Die Information der Messeinrichtung 10 wird an eine Auswerte- und Steuereinrichtung 11 weitergeleitet. In der Auswerte- und Steuereinrichtung 11 kann eine später zu beschreibende Kantendetektion durchgeführt werden.

Bei der Bestrahlung des Werkstücks 8 durch den Laserstrahl 2 entsteht Strahlung und zwar als Prozesslicht (Prozessstrahlung) und/oder reflektierte Laserstrahlung. Bei dem Prozesslicht und der reflektierten Laserstrahlung bzw. damit in Zusammenhang stehende Größen handelt es sich um Parameter in Sinne der Erfindung, die mit der Bestrahlung des Werkstücks 8 in Beziehung stehen.

Die Figur 2 zeigt in ebenfalls schematisierter Darstellung den Laserbearbeitungskopf 5 mit der Düse 7. Der Laserstrahl 2 weist an der Stelle 15 seinen geringsten Durchmesser (d.h. seinen Fokus) auf. Die Stelle 15 entspricht daher der Fokuslage. Die Fokuslage kann im Verhältnis zur Oberfläche des Werkstücks 8 verändert werden, indem die Fokussiereinrichtung 6 verstellt wird und/oder der Abstand der Düse 7 (d.h. des Bearbeitungskopfes 5) zum Werkstück 8 verändert wird. Ist die Fokuslage 15 über dem Werkstück 8, so entsteht im Werkstück 8 eine Öffnung 16, die sich nach unten erweitert. Liegt die Fokuslage 15 unter dem Werkstück 8, entsteht eine Öffnung 17, die sich nach oben erweitert. Liegt die Fokuslage 15 auf der Oberfläche 18 des Werkstücks 8, so entsteht eine Öffnung 19 mit im Wesentlichen parallelen Seitenwänden. Bei der Werkstückbearbeitung liegt der Fokus des Laserstrahls 2 beispielsweise auf der Oberseite 18 des Werkstücks 8 oder innerhalb des Werkstücks 8.

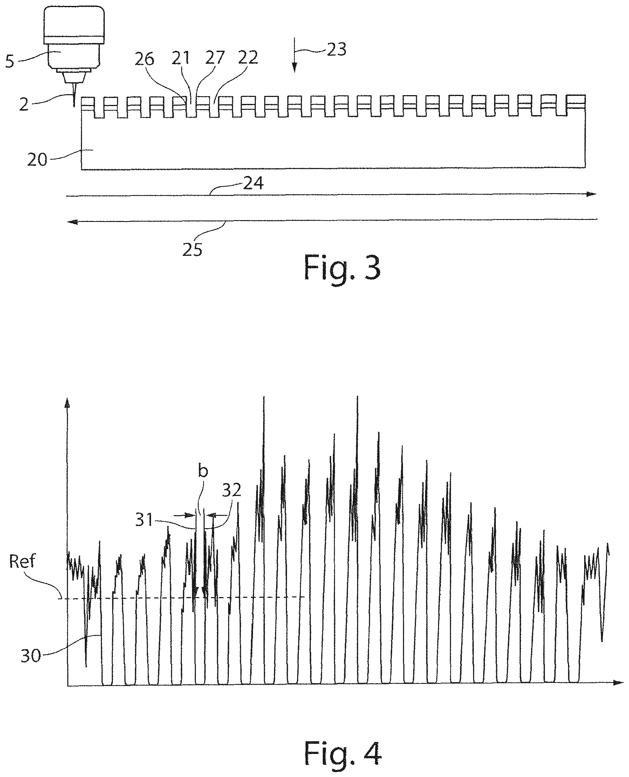

Die Figur 3 zeigt eine Draufsicht auf einen plattenförmigen Körper 20, in den mehrere Einschnitte 21, 22 mittels des Lasers der Laseranlage 1 eingebracht wurden. Die Einschnitte 21, 22 wurden mit unterschiedlichen Fokuslagen eingebracht. Die Breite der Einschnitte 21, 22 ist breiter als eine einfache Schnittspaltbreite. Insbesondere wurden die Einschnitte 21, 22 eingebracht, indem der Laserstrahl 2 zunächst in Längsrichtung 23 der einzubringenden Einschnitte 21, 22 bewegt wurde. Anschließend wurde der Laserstrahl 2 senkrecht zur Längsrichtung 23 bewegt und anschließend entgegen der Pfeilrichtung 23 bewegt. Auf diese Art und Weise sind die Einschnitte 21, 22 entstanden. Um die Breite der Einschnitte 21, 22 zu bestimmen, wird der plattenförmige Körper 20, der aufgrund der Einschnitte 21, 22 kammartig ausgebildet ist, mit dem Laserstrahl 2 bestrahlt. Der Laserstrahl 2 weist, gemäß der Erfindung, bei der Bestrahlung eine geringere Leistung auf als beim Erzeugen der Einschnitte 21, 22; jedoch eine ausreichend hohe Leistung, so dass Prozesslicht entsteht.

Dazu werden der Laserbearbeitungskopf 5 und der plattenförmige Körper 20 relativ zueinander bewegt. Insbesondere wird der Laserbearbeitungskopf 5 in Pfeilrichtung 24, also quer zur Längsrichtung 23 der Einschnitte 21, 22 über die Einschnitte 21, 22 bewegt.

Grundsätzlich ist es denkbar, den Laserbearbeitungskopf 5 und den plattenförmigen Körper 20 nur einmal relativ zueinander zu bewegen und beide sich in Pfeilrichtung 23 erstreckende Kanten 26, 27 eines Einschnitts 21, 22 zu detektieren. Ein verbessertes Messergebnis wird jedoch erhalten, wenn der Bearbeitungskopf 5 und der plattenförmige Körper 20 zweimal relativ zueinander bewegt werden, insbesondere der Bearbeitungskopf 5 zunächst in Pfeilrichtung 24 relativ zum plattenförmigen Körper 20 bewegt wird und anschließend mit einem Versatz in Pfeilrichtung 25. Bei der Bewegung in Pfeilrichtung 24 wird dabei die Kante 27 detektiert und bei der Bewegung in Pfeilrichtung 25 die Kante 26.

Die Figur 4 zeigt einen Parameter 30, insbesondere die Prozesslichtleistung, der erfasst wird, wenn der Laserstrahl 2 relativ zum plattenförmigen Körper 20 bewegt wird. Zur Kantendetektion wird ermittelt, wann der Parameter 30 den Referenzwert REF passiert. So wird beispielsweise die linke Kante 26 des Einschnitts 21 an der Stelle 31 detektiert und die rechte Kante 27 an der Stelle 32, wenn der Parameter 30 den Referenzwert REF jeweils über- bzw. unterschreitet. Der Abstand zwischen diesen beiden Stellen 31, 32 ergibt die Breite b des Einschnitts 21. Auf diese Art und Weise kann die Breite aller Einschnitte 21, 22 ermittelt werden. Die Fokuslage, die dem Einschnitt 21, 22 zugeordnet wird, der die geringste Breite aufweist, stellt die Referenz-Fokuslage dar.

Zusätzlich oder alternativ könnten auch Gradienten des Parameters 30 ermittelt werden und die Gradienten mit einem zweiten Referenzwert verglichen werden. Eine Kante könnte somit detektiert werden, wenn der Referenzwert REF oder der zweite Referenzwert oder auch beide Referenzwerte auf einmal passiert werden.

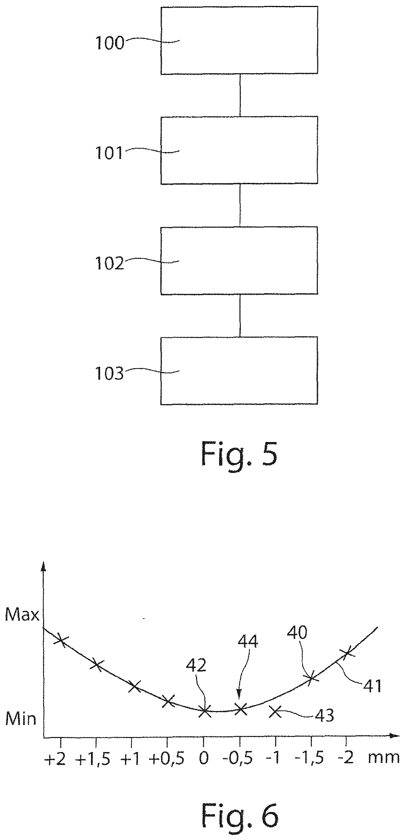

In der Figur 5 ist schematisch das erfindungsgemäße Verfahren in einem Flussdiagramm dargestellt. In einem ersten Schritt 100 werden zumindest zwei Einschnitte mit einem Laserstrahl einer Laseranlage in einem plattenförmigen Körper erzeugt, wobei für die Einschnitte unterschiedliche Fokuslagen eingestellt werden. Anschließend erfolgt im Schritt 101 ein Bestrahlen des plattenartigen Körpers mit dem Laserstrahl, wobei vorzugsweise der Laserstrahl und der plattenartige Körper relativ zueinander bewegt werden.

Im Schritt 102 werden die Kanten der Einschnitte detektiert, indem ein oder mehrere mit dem Bestrahlen des plattenartigen Körpers in Beziehung stehende Parameter erfasst werden. Beispielsweise wird das entstehende Prozesslicht erfasst.

Im Schritt 103 erfolgt das Ermitteln der Breite der Einschnitte anhand der erfassten Parameter.

Figur 6 zeigt ein Diagramm zur Erläuterung der mathematischen Auswertung der ermittelten Breiten der Einschnitte. Auf der X-Achse sind verschiedene Fokuslagenverstellungen in mm angegeben. Die Kreuze 40 stellen die für die eingestellten Fokuslagen ermittelten Einschnittbreiten dar. Die gemessenen Einschnittbreiten 40 wurden durch einen Kurvenfit mit der Kurve 41 angenähert. Aus dem Minimum der Kurve 41 kann die minimale Schnittspaltbreite bzw. der Einschnitt mit der geringsten Breite und die zugehörige Fokuslage bestimmt werden. Dabei liegt im vorliegenden Beispiel die minimale Breite eines Einschnitts an der Stelle 42 bzw. zwischen den Messpunkten 42 und 44, obwohl der Messpunkt 43 bzw. die ermittelte Einschnittbreite 43 geringer ist. Da dieser Wert jedoch weit von der Kurve 41 entfernt liegt, ist erkennbar, dass diese ermittelte Breite nicht zu den übrigen Breiten passt, d.h. deutlich von der berechneten Kurve 41 abweicht. Diese Breite kann daher bei der Auswertung vernachlässigt werden. Durch die Bewertung der Genauigkeit des Kurvenfits kann außerdem die Messqualität überprüft werden.

## Patentansprüche

1. Verfahren zur Bestimmung einer Referenz-Fokuslage (15) eines Laserstrahls (2) einer Laseranlage (1) für einen Werkstückbearbeitungsprozess, mit den Schritten:
a. Erzeugen zumindest zweier Einschnitte (21, 22) mit dem Laserstrahl (2) der Laseranlage (1) in einem plattenartigen Körper (20), wobei für die zumindest zwei Einschnitte (21, 22) unterschiedliche Fokuslagen eingestellt werden, **gekennzeichnet durch**
b. Bestrahlen des plattenartigen Körpers (20) mit dem Laserstrahl (2) der Laseranlage (1) bei einer geringeren Laserleistung als im vorhergehenden Schritt, jedoch eine ausreichend hohe Leistung, so dass eine Prozessstrahlung und/oder eine reflektierte Laserstrahlung entsteht;
c. Detektion von Kanten (26, 27) der Einschnitte (21, 22), indem ein oder mehrere mit dem Bestrahlen des plattenartigen Körpers in Beziehung stehende Parameter (30) erfasst werden;
d. Ermitteln der Breite (b) der Einschnitte (21, 22) anhand des oder der erfassten Parameter (30);
e. Ermitteln als Referenz-Fokuslage diejenige Fokuslage, bei der der Einschnitt mit der geringsten Breite (b) erzeugt wurde.

2. Verfahren nach Anspruch 1, **dadurch gekennzeichnet, dass** der Laserstrahl (2) und der plattenartige Körper (20) quer zur Längsrichtung (23) der Einschnitte (21, 22) relativ zueinander bewegt werden.

3. Verfahren nach Anspruch 2, **dadurch gekennzeichnet, dass** der Laserstrahl (2) mit konstantem Abstand des den Laserstrahl (2) aussendenden Bearbeitungskopfs (5) zum plattenartigen Körper (20) und mit konstanter Geschwindigkeit relativ zum plattenartigen Körper (20) bewegt wird.

4. Verfahren nach einem der vorhergehenden Ansprüche, **dadurch gekennzeichnet, dass** die Einschnitte (21, 22) mit einer Breite (b) erzeugt werden, die größer ist als eine einfache Schnittspaltbreite.

5. Verfahren nach einem der vorhergehenden Ansprüche, **dadurch gekennzeichnet, dass** der Laserstrahl (2) und der plattenartige Körper (20) zweimal in entgegen gesetzten Richtungen (24, 25) relativ zueinander bewegt werden, wobei für jede Relativbewegung nur eine der Kanten (26, 27) eines Einschnitts (21, 22) detektiert wird.

6. Verfahren nach Anspruch 5, **dadurch gekennzeichnet, dass** für jede Relativbewegung diejenige Kante (26, 27) des Einschnitts (21, 22) detektiert wird, die in der Bewegungsrichtung nachfolgend an den Einschnitt (21, 22) angeordnet ist.

7. Verfahren nach einem der vorhergehenden Ansprüche, **dadurch gekennzeichnet, dass** die Einschnitte (21, 22) erzeugt werden, indem in einer Längsrichtung (23) des zu erzeugenden Einschnitts (21, 22) mit dem Laserstrahl (2) ein erster einfacher Schnittspalt erzeugt wird, anschließend in einer Richtung quer zur Längsrichtung (23) ein zweiter einfacher Schnittspalt erzeugt wird und dann in Längsrichtung (23) aber entgegen gesetzt zur Erzeugung des ersten einfachen Schnittspalts ein dritter einfacher Schnittspalt erzeugt wird, bis ein Teil des plattenartigen Körpers (20) ausgeschnitten ist.

8. Verfahren nach einem der vorhergehenden Ansprüche, **dadurch gekennzeichnet, dass** eine Kante eines Einschnitts (21, 22) detektiert wird, wenn ein erfasster Parameter einen ersten vorgegebenen Referenzwert (REF) über- oder unterschreitet.

9. Verfahren nach einem der vorhergehenden Ansprüche, **dadurch gekennzeichnet, dass** ein Gradient eines erfassten Parameters (30) gebildet und eine Kante eines Einschnitts (21, 22) erkannt wird, wenn der Gradient einen zweiten Referenzwert über- oder unterschreitet.

10. Verfahren nach einem der vorhergehenden Ansprüche, **dadurch gekennzeichnet, dass** aus dem oder den erfassten Parameter(n) (30) über mehrere Abtastzeitpunkte ein Gradient gebildet wird, ein Mittelwert der Gradienten gebildet wird und dieser mit einem dritten Referenzwert verglichen wird, wobei eine Kante eines Einschnitts (21, 22) detektiert wird, wenn der Mittelwert einen dritten Referenzwert über- oder unterschreitet.

11. Verfahren nach einem der vorhergehenden Ansprüche, **dadurch gekennzeichnet, dass** ein mathematischer Kurvenfit an die ermittelten Breiten durchgeführt wird und aus dem Minimum der Kurve die minimale Schnittspaltbreite und die zugehörige Fokuslage als Referenz-Fokuslage bestimmt werden.

## Claims

1. Method for determining a reference focal position (15) of a laser beam (2) of a laser installation (1) for a workpiece processing process, having the steps of:
a. producing at least two incisions (21, 22) with the laser beam (2) of the laser installation (1) in a plate-like member (20), wherein different focal positions are set for the at least two incisions (21, 22), **characterized by**
b. irradiating the plate-like member (20) with the laser beam (2) of the laser installation (1) at a lower laser power than in the previous step, however at a sufficiently high power such that process radiation and/or reflected laser radiation is/are generated;
c. detecting edges (26, 27) of the incisions (21, 22) by one or more parameters (30) relating to the irradiation of the plate-like member being detected;
d. establishing the width (b) of the incisions (21, 22) using the parameter(s) (30) detected;
e. establishing as a reference focal position the focal position at which the incision with the smallest width (b) was produced.

2. Method according to claim 1, **characterised in that** the laser beam (2) and the plate-like member (20) are moved relative to each other transversely relative to the longitudinal direction (23) of the incisions (21, 22).

3. Method according to claim 2, **characterised in that** the laser beam (2) is moved with a constant spacing of the processing head (5) which emits the laser beam (2) with respect to the plate-like member (20) and at a constant speed relative to the plate-like member (20).

4. Method according to any one of the preceding claims, **characterised in that** the incisions (21, 22) are produced with a width (b) which is greater than a single cutting gap width.

5. Method according to any one of the preceding claims, **characterised in that** the laser beam (2) and the plate-like member (20) are moved twice in opposing directions (24, 25) relative to each other, wherein for each relative movement only one of the edges (26, 27) of an incision (21, 22) is detected.

6. Method according to claim 5, **characterised in that** there is detected for each relative movement the edge (26, 27) of the incision (21, 22) which is arranged following the incision (21, 22) in the movement direction.

7. Method according to any one of the preceding claims, **characterised in that** the incisions (21, 22) are produced by a first single cutting gap being produced using the laser beam (2) in a longitudinal direction (23) of the incision (21, 22) to be produced, subsequently a second single cutting gap being produced in a direction transverse relative to the longitudinal direction (23) and then, in the longitudinal direction (23) but in an opposing direction to the production of the first single cutting gap, a third single cutting gap being produced until a portion of the plate-like member (20) is cut out.

8. Method according to any one of the preceding claims, **characterised in that** an edge of an incision (21, 22) is detected when a detected parameter exceeds or falls below a first predetermined reference value (REF).

9. Method according to any one of the preceding claims, **characterised in that** a gradient of a detected parameter (30) is formed and an edge of an incision (21, 22) is identified when the gradient exceeds or falls below a second reference value.

10. Method according to any one of the preceding claims, **characterised in that** from the parameter(s) (30) which is/are detected over a plurality of sampling points a gradient is formed, a mean value of the gradients is formed and this is compared with a third reference value, wherein an edge of an incision (21, 22) is detected when the mean value exceeds or falls below a third reference value.

11. Method according to any one of the preceding claims, **characterised in that** a mathematical curve fit is carried out at the established widths and, from the minimum of the curve, the minimal cutting gap width and the associated focal position are determined as a reference focal position.

## Revendications

1. Procédé de détermination d'une position focale de référence (15) d'un rayon laser (2) d'un système laser (1) pour un processus d'usinage de pièce ouvrée, comprenant les étapes suivantes :
a. la génération d'au moins deux entailles (21, 22) avec le rayon laser (2) du système laser (1) dans un corps en forme de plaque (20), des positions focales différentes étant réglées pour les au moins deux entailles (21, 22), **caractérisé par**
b. l'irradiation du corps en forme de plaque (20) avec le rayon laser (2) du système laser (1) avec une puissance laser plus faible qu'à l'étape précédente, une puissance toutefois suffisamment élevée pour qu'il se produise un rayonnement de processus et/ou un rayonnement laser réfléchi ;
c. la détection d'arêtes (26, 27) des entailles (21, 22) en acquérant un ou plusieurs paramètres (30) qui se trouvent en relation avec l'irradiation du corps en forme de plaque ;
d. la détermination de la largeur (b) des entailles (21, 22) à l'aide du ou des paramètres (30) acquis ;
e. la détermination, en tant que position focale de référence, de la position focale à laquelle a été générée l'entaille ayant la plus petite largeur (b).

2. Procédé selon la revendication 1, **caractérisé en ce que** le rayon laser (2) et le corps en forme de plaque (20) sont déplacés l'un par rapport à l'autre transversalement à la direction longitudinale (23) des entailles (21, 22).

3. Procédé selon la revendication 2, **caractérisé en ce que** le rayon laser (2) est déplacé avec un écart constant entre la tête d'usinage (5) qui émet le rayon laser (2) et le corps en forme de plaque (20) et avec une vitesse constante par rapport au corps en forme de plaque (20).

4. Procédé selon l'une des revendications précédentes, **caractérisé en ce que** les entailles (21, 22) sont générées avec une largeur (b) qui est plus grande qu'une simple largeur de trait de coupe.

5. Procédé selon l'une des revendications précédentes, **caractérisé en ce que** le rayon laser (2) et le corps en forme de plaque (20) sont déplacés deux fois dans des directions opposées (24, 25) l'un par rapport à l'autre, une seule des arêtes (26, 27) d'une entaille (21, 22) étant détectée pour chaque mouvement relatif.

6. Procédé selon la revendication 5, **caractérisé en ce que** pour chaque mouvement relatif, l'arête (26, 27) de l'entaille (21, 22) qui est détectée est celle qui, dans la direction du mouvement, se trouve après l'entaille (21, 22) .

7. Procédé selon l'une des revendications précédentes, **caractérisé en ce que** les entailles (21, 22) sont générées en générant, avec le rayon laser (2), un premier trait de coupe simple dans une direction longitudinale (23) de l'entaille (21, 22) à générer, ensuite en générant un deuxième trait de coupe simple dans une direction transversale à la direction longitudinale (23) et ensuite en générant un troisième trait de coupe simple dans la direction longitudinale (23), mais à l'opposé de la génération du premier trait de coupe simple, jusqu'à ce qu'une partie du corps en forme de plaque (20) soit découpée.

8. Procédé selon l'une des revendications précédentes, **caractérisé en ce qu'**une arête d'une entaille (21, 22) est détectée lorsqu'un paramètre acquis devient supérieur ou inférieur à une première valeur de référence (REF) prédéfinie.

9. Procédé selon l'une des revendications précédentes, **caractérisé en ce qu'**un gradient d'un paramètre (30) acquis est formé et une arête d'une entaille (21, 22) est reconnue lorsque le gradient devient supérieur ou inférieur à une deuxième valeur de référence.

10. Procédé selon l'une des revendications précédentes, **caractérisé en ce qu'**un gradient sur plusieurs instants d'échantillonnage est formé à partir du ou des paramètre(s) (30) acquis, une valeur moyenne des gradients est formée et celle-ci est comparée à une troisième valeur de référence, une arête d'une entaille (21, 22) étant détectée lorsque la valeur moyenne devient supérieure ou inférieure à une troisième valeur de référence.

11. Procédé selon l'une des revendications précédentes, **caractérisé en ce qu'**un ajustement de courbe mathématique est effectué sur les largeurs déterminées et la largeur de trait de coupe minimale et la position focale associée en tant que position focale de référence sont désignées à partir du minimum de la courbe.
